# EUROPEAN PATENT APPLICATION

(11) **EP 1 635 410 A1**
(43) Date of publication of application: **15.03.2006**
(21) Application number: 04732497.5
(22) Date of filing: 12.05.2004
(51) Int. Cl.: H01M 2/10, B65D 75/36, B65D 65/46, B65D 71/08

(54) **BATTERY PACKAGE AND PROCESS FOR PRODUCING THE SAME**

(30) Priority: 16.05.2003 JP 2003139093
(71) Applicant: MATSUSHITA ELECTRIC INDUSTRIAL CO., LTD., Kadoma-shi, Osaka 571-8501 (JP)
(72) Inventor: KUMAKURA, Katsuhiko, Kyoto 619-0237 (JP); UMEDA, Tozo, Osaka 591 -8021 (JP); UEMURA, Kinji, Osaka 583-08823 (JP)
(74) Representative: Bradley, Josephine Mary
(86) International application number: PCT/JP2004/006719
(87) International publication number: WO 2004/102697

(57) **Abstract**

According to the present invention, a battery package excellent in strength, impact resistance and transparency, wherein main components thereof are made of a biodegradable resin, is obtained by: forming a container having a holder portion from an oriented sheet of biodegradable aliphatic polyester; and then integrating the container with a base made of oriented biodegradable aliphatic polyester material.

## Description

### Technical Field

The present invention relates to a battery package and a process for producing the same.

### Background Art

So far, thermoplastic resins such as polyethylene, polyvinyl chloride, polystyrene and polyethylene terephthalate (PET) have been used as materials for product packages. However, since these resins are chemically stable, they are not decomposed in natural environment but remain as they are while maintaining their physical shapes and chemical properties.

Accordingly, use of such materials is problematic in that it may lead to environmental pollution or increase landfill sites. In particular, most of battery packages, which adopt PET, are disposed as other waste is, while the batteries are collected.

To solve the above problems, biodegradable resins have been developed as environmentally friendly resins which are decomposed and vanished with time in the natural environment. These resins have already been adopted in some plastic bags or containers. Examples of the biodegradable resins include aliphatic polyester, modified polyvinyl alcohol (PVA), cellulose ester compounds, modified starch and the like. Among them, the aliphatic polyester is environmentally preferable because alcohol and carboxylic acid generated therefrom during the decomposition are extremely less toxic.

The biodegradable resins have been adopted in relatively large molded products such as a film as disclosed by Japanese Laid-Open Patent Publication No. HEI10-100353, a document folder as disclosed by Japanese Laid-Open Patent Publication No. 2001-130183, food trays and the like. However, due to their brittleness, it has been difficult to mold or form the resin into fine shape such as a battery package. The battery package requires sufficient strength and impact resistance because it holds relatively heavy batteries, as well as transparency. However, it has been difficult to obtain a molded product that satisfies all these requirements.

In view of the above, an object of the present invention is to provide a battery package excellent in strength, impact resistance and transparency with use of a biodegradable resin. Further, another object of the present invention is to provide an environmentally friendly battery package whose major components are made of a biodegradable resin, respectively.

### Disclosure of Invention

The present invention relates to a battery package comprising a base and a container, wherein the container comprises an oriented sheet of biodegradable aliphatic polyester.

The base preferably comprises biodegradable aliphatic polyester.

The battery package preferably includes a laminate layer comprising biodegradable aliphatic polyester between the base and the container.

The biodegradable aliphatic polyester is preferably a polylactic polymer.

The oriented sheet preferably has tensile strength of 40 to 90 MPa.

The oriented sheet preferably has tensile elasticity of 1 to 7 GPa.

The oriented sheet preferably has haze of less than 10 %.

The container preferably holds two or more batteries wrapped in a shrink pack.

The shrink pack preferably comprises biodegradable aliphatic polyester.

Also in this case, the biodegradable aliphatic polyester is preferably a polylactic polymer.

The shrink pack is preferably made of an oriented sheet of biodegradable aliphatic polyester.

The present invention further relates to a process for producing a battery package comprising the steps of:
molding an oriented sheet of biodegradable aliphatic polyester into a container having a holder portion by vacuum/pressure forming; and integrating the container with a base comprising an oriented sheet of biodegradable aliphatic polyester to obtain a battery package.

In the integration step, it is preferable that a laminate layer comprising an oriented sheet of biodegradable aliphatic polyester is adhered to the base in advance to obtain an adhered product, and then the laminate layer and the container are heat-sealed to integrate the base and the container.

Further, in the integration step, it is preferable that an edge of the container is bent on the opposite side of the holder portion in advance to form a fold, and then the base is slid into the fold to integrate the base and the container.

While the novel features of the invention are set forth particularly in the appended claims, the invention, both as to organization and content, will be better understood and appreciated, along with other objects and features thereof, from the following detailed description taken in conjunction with the drawings.

### Brief Description of Drawings

FIG. 1 is an exploded oblique view schematically illustrating an embodiment of a battery package according to the present invention.
FIG. 2 is an exploded oblique view schematically illustrating another embodiment of the battery package according to the present invention.
FIG. 3 is a flowchart schematically illustrating the major steps of a first embodiment of a process for producing a battery package according to the present invention.
FIG. 4 is a flowchart schematically illustrating the major steps of a second embodiment of the process for producing a battery package according to the present invention.
FIG. 5 is a flowchart illustrating the steps of a process for producing a battery package according to Example 1 of the present invention.
FIG. 6 is a flowchart illustrating the steps of a process for producing a battery package according to Example 2 of the present invention.

### Best Mode for Carrying Out the Invention

### (1) Battery package

The present invention relates to a battery package comprising a base and a container, wherein the container comprises an oriented sheet of biodegradable aliphatic polyester. In view of the above-mentioned conventional problems, the inventors of the present invention have conducted experiments and analyses on molding of a biodegradable resin and the resulting molded product. As a result, they have found that a battery package can be produced using a biodegradable resin.

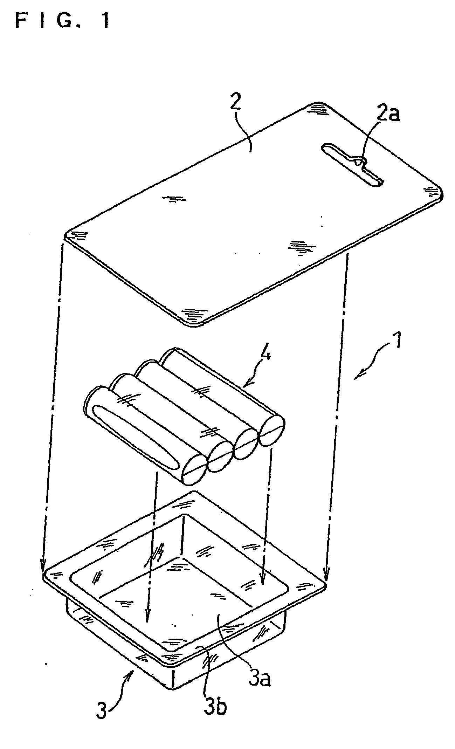

FIG. 1 is an exploded oblique view schematically illustrating an embodiment of a battery package according to the present invention.

A battery package 1 shown in FIG. 1 comprises a base 2 and a transparent container 3. A holder portion 3a of the container 3 accommodates a battery pack 4. On the surface of the base 2 facing to the container 3, a certain print is given, on which a laminate layer (not shown) is provided.

Then, a brim 3b of the container 3 and the laminate layer are bonded, for example, by heat seal, to integrate the base 2 and the container 3. The base 2 may have a hanging hole 2a so that the battery package 1 can be hanged on a sales shelf for display. As to a conventional battery package, backing paper has been adopted in place of the base 2.

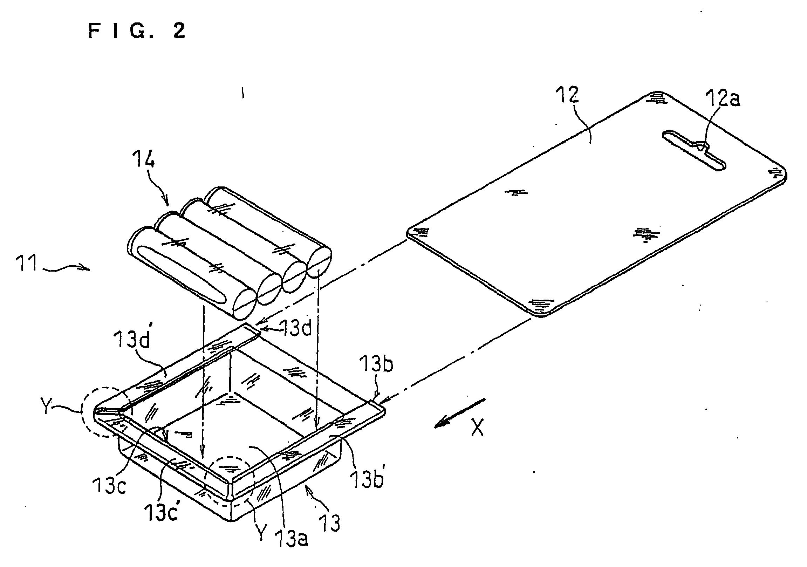

FIG. 2 is an exploded oblique view schematically illustrating another embodiment of the battery package according to the present invention.

A battery package 11 shown in FIG. 2 comprises a base 12 and a transparent container 13. A holder portion 13a of the container 13 accommodates a battery pack 14. On the surface of the base 12 facing to the container 13, a certain print is given, on which a laminate layer may not be formed in this embodiment.

In spite of forming the laminate layer, a portion of the container 13 corresponding to the brim 3b in FIG. 1 is folded to the opposite side to the holder portion 13a to form folds 13b, 13c and 13d. More specifically, the periphery of the container 13 was folded by 180 degrees on the base 12 side to form the folds. Along the alternate long and short dash lines shown in FIG. 2, the base 12 is slid into the folds 13b and 13d from the edges thereof in the direction of an arrow X. When the base 12 reaches the fold 13c, the base 12 and the container 13 are integrated.

Since the base 12 is merely inserted in the folds 13b, 13c and 13d of the container 13, it is preferable to fix the base 12 with the folds 13b, 13c and 13d. Any means may be used to fix them without particular limitation. For example, they may be fixed by means of heat seal, an adhesive or a stapler.

In the same manner as the first embodiment, the base 12 may have a hanging hole 12a so that the battery package 11 can be hanged on a sales shelf for display.

As to the battery packages 1 and 11 shown in FIGs. 1 and 2, it is at least required that the containers 3 and 13 are transparent so that design printed on the outer jacket of the batteries in the battery packs 4 and 14 can be observed by a user or a customer. The bases 2 and 12, which have printed surfaces facing to the containers 3 and 13, respectively, may also be transparent.

Examples of the biodegradable resin usable in the present invention include, for example, aliphatic polyester, modified polyvinyl alcohol (PVA), cellulose ester compounds and modified starch. Among them, the aliphatic polyester is environmentally preferable because alcohol and carboxylic acid generated therefrom during decomposition are extremely less toxic.

Examples of the aliphatic polyester include polymers produced by microorganism-mediated processes such as a hydroxybutyric acid-valeric acid polymer, synthetic polymers such as polycaprolactone and an aliphatic dicarboxylic acid-aliphatic diol condensate and semisynthetic polymers such as polylactic polymers.

In view of excellent transparency, stiffness, heat resistance and workability, the polylactic polymers are preferably used. The polylactic polymer may be a homopolymer of L-lactic acid and/or D-lactic acid. Alternatively, it may be a copolymer or a mixture (or a polymer alloy) with other hydroxycarboxylic acids as long as its biodegradability is not impaired.

Examples of the other hydroxycarboxylic acids include, for example, glycolic acid, 3-hydroxybutylic acid, 4-hydroxybutylic acid, 3-hydroxyvaleric acid, 4-hydroxyvaleric acid and 6-hydroxycaproic acid and the like.

The polylactic polymer, a preferable example of the biodegradable resin, preferably has a weight-average molecular weight in the range of 50,000 to 100,000. If the weight-average molecular weight is less than 50,000, practical physical properties are hardly exhibited. On the contrary, if the weight-average molecular weight is higher than 100,000, melt viscosity becomes too high and moldability deteriorates.

The polylactic polymer shows high glass transition point and crystallinity and has similar characteristics to those of PET. More preferably, a film made of polylactic acid can be uniaxially or biaxially oriented. The resulting oriented sheet, in which molecules are oriented, is low in brittleness, hard to crack and extremely favorable in strength. Further, the polylactic polymer film may be formed by extrusion casting, which ensures transparency of the film. As described below, it is preferable in the present invention to use an oriented sheet to produce a container, in particular by vacuum/pressure forming.

A raw material for the polylactic polymer may be corn. Starch is separated from corn and then converted into sugar. Then, lactic acid is obtained by lactic acid fermentation, which is converted into lactide, and then polymerized into polylactic acid. Thus, the polylactic polymer can be made without using petroleum materials. Therefore, according to the present invention, the finally obtained battery package and a process of preparing a raw material thereof, i.e., the polylactic polymer, are environmentally friendly.

The biodegradable resin may be a resin composition. In this case, the biodegradable resin may be mixed with other polymeric materials as long as the effect of the present invention is not impaired. Alternatively, in order to control the physical properties and workability, the biodegradable resin may be mixed with a plasticizer, a lubricant, an inorganic filler, a light absorber such as an ultraviolet absorber, a heat stabilizer, a light stabilizer, a coloring agent, a pigment and a modifier.

In particular, it is necessary to mold the container of the battery package to have a holder portion, which is relatively precisely designed to fit the battery shape. That is, the container requires not only the transparency but also moldability. However, since the biodegradable resin has brittleness, it may be cracked under the conventional molding conditions.

To solve the problem, in the present invention, it is preferable to form the container using an oriented sheet of biodegradable resin. Since the sheet is oriented, the sheet is less brittle and improved in strength. Thereby, the obtained container becomes highly resistive against cracking. A biaxially oriented sheet is more preferable than a uniaxially oriented sheet because it is higher in strength.

Although the oriented sheet shows higher strength than a non-oriented sheet, it is slightly defective in workability. For this reason, it is difficult to mold the oriented biodegradable resin sheet into the above-described container by vacuum forming under the same conditions as adopted for molding a package from a commonly used thermoplastic resin. Accordingly, in the present invention, the oriented sheet is molded into the container by vacuum/pressure forming.

In order to produce a conventional battery package using PET, the vacuum forming is generally adopted. According to this technique, a resin sheet is set in a clamp mold and softened by heating with a heater. Then, through vacuum suction, the resin sheet is pressed onto the mold by atmospheric pressure. However, since the oriented biodegradable resin sheet possesses high strength, the atmospheric pressure is not enough to press the oriented sheet onto the mold, and hence the desired shape cannot be obtained.

From this viewpoint, the battery package of the present invention is preferably produced by vacuum/pressure forming. According to this technique, compressed air is fed into the mold from a vacuum/pressure chamber to apply molding pressure higher than the atmospheric pressure to the sheet. Thereby, the resin sheet of high strength can also be pressed onto the mold with reliability.

The oriented sheet preferably has tensile strength (breaking strength) of 40 to 90 MPa. If the tensile strength is lower than 40 MPa, sufficient strength to carry the battery is not exhibited. Further, if the tensile strength is higher than 90 MPa, the sheet strength becomes too high, decreasing moldability and transparency of the sheet. In particular, the tensile strength is preferably 60 to 80 MPa. The tensile strength in the present invention complies with JIS K-7127, which is measured at a test rate of 200 mm/min using a Type 2 test specimen.

Further, the oriented sheet preferably has tensile elasticity of 1 to 7 GPa. If the tensile elasticity of the oriented sheet is lower than 1 GPa, the sheet becomes too stiff, decreasing in moldability. Further, if the tensile elasticity is higher than 7 GPa, the sheet becomes too soft, which may cause difficulty in carrying the battery. In particular, the tensile elasticity is preferably 2 to 6 GPa. The tensile elasticity may be measured in accordance with JIS K-7127.

As an index of the sheet transparency, the oriented sheet preferably has haze of less than 10%. If the haze is not less than 10%, the sheet decreases in transparency, which impairs the package's inherent function of carrying an article to be visible to a customer. In particular, the haze is preferably 2 to 8 %. The haze is measured in accordance with JIS K-7105.

Thus, the battery package according to the present invention comprises at least a base and a container, and the container comprises an oriented sheet of biodegradable aliphatic polyester.

It is preferable that the base also comprises the biodegradable aliphatic polyester.

If a laminate layer comprising the biodegradable aliphatic polyester is formed between the base and the container, the base and the container can be integrated by heat seal as described later.

If the peripheral end of the container was bent to form a fold, the base can be inserted into the fold to be integrated with the container, even if the laminate layer is not provided.

The container accommodates, in a holder portion thereof, a battery pack including two or more batteries wrapped in a shrink pack. It is preferable that the shrink pack also comprises the biodegradable aliphatic polyester. The biodegradable aliphatic polyester is preferably a polylactic polymer and the shrink pack is preferably made of an oriented sheet of the biodegradable aliphatic polyester.

The base is preferably 50 to 200 *µ*m in thickness. If the base thickness is smaller than 50 *µ*m, the base may lack in strength to carry the batteries. Further, if the base thickness is larger than 200 µm, it decreases in thermal conductivity, causing variations in adhesion strength when the container and the laminate layer are heat-sealed by applying heat from the base side. Thereby, the resulting package decreases in quality. Further, control of heat during the heat seal process is difficult.

The laminate layer is preferably 20 to 80 *µ*m in thickness. If the thickness of the laminate layer is smaller than 20 µm, it decreases in cushioning property, causing variations in adhesion pressure and strength during the heat seal process. Alternatively, the laminate layer smaller than 20 µm in thickness may stretch too much or be apt to tear. Further, if the thickness of the laminate layer is larger than 80 *µ*m, it takes too long to perform the heat seal process. Further, the base may be affected adversely, e.g., deformed, due to too much heat given thereto. In particular, the laminate layer is preferably 40 to 60 *µ*m in thickness.

The oriented sheet used to form the container by vacuum/pressure forming is preferably 200 to 600 µm in thickness. If the thickness of the sheet is smaller than 200 µm, the sheet cannot tolerate heat in a wide temperature range during the molding. Alternatively, the sheet may be stretched too much or warped due to its small thickness. Moreover, heat control during the molding becomes difficult. On the other hand, if the sheet is thicker than 600 µm, no further improvement is expected.

The printing on the base may be carried out by a usual method and the adhesion of the laminate layer to the base may be achieved using a conventional adhesive. Examples of the adhesive include, for example, those based on vinyl, acryl, polyamide, polyester, rubber and urethane.

In the present invention, however, it is preferable to use a biodegradable adhesive based on polysaccharides such as starch, amylose and amylopectin, proteins and polypeptides such as glue, gelatin, casein, zein and collagen, unvulcanized rubber and aliphatic polyester or the like.

### (2) Process for producing battery package

Hereinafter, explanation is given to a process for producing a battery package according to the present invention.

The battery package according to the present invention may be produced by the steps of: forming a container having a holder portion from an oriented sheet of biodegradable aliphatic polyester by vacuum/pressure forming; and integrating the container with a base comprising an oriented sheet of biodegradable aliphatic polyester to obtain a battery package.

First, the process for producing the battery package according to the present invention is briefly explained.

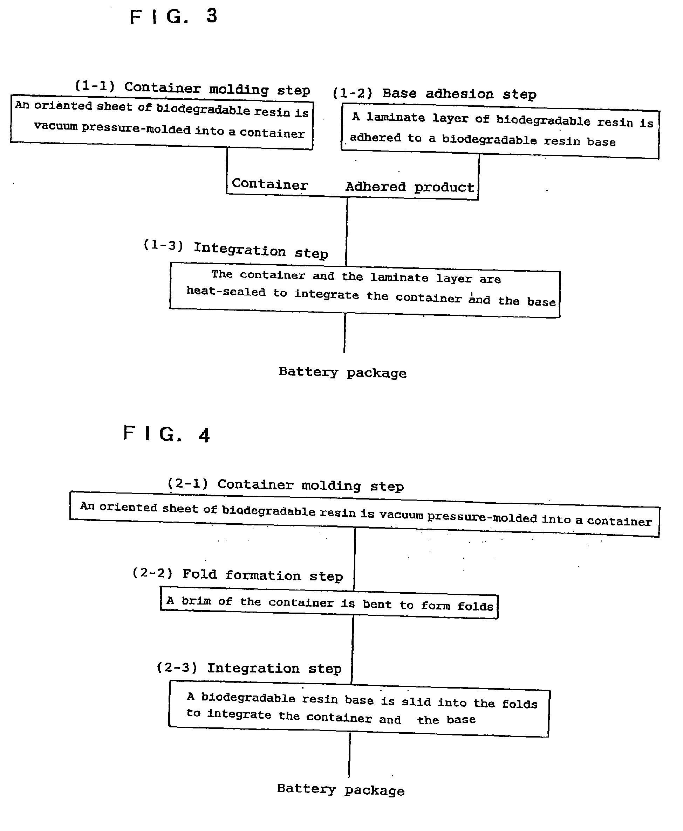

FIG. 3 is a schematic flowchart illustrating major steps of a first embodiment of the process for producing the battery package according to the present invention. FIG. 4 is a schematic flowchart illustrating major steps of a second embodiment of the process for producing the battery package according to the present invention.

According to the first embodiment, in the container molding step (1-1) shown in FIG. 3, an oriented sheet of biodegradable aliphatic polyester is molded into a container having a holder portion by vacuum/pressure forming. Then, in the base adhesion step (1-2), a laminate layer comprising an oriented biodegradable aliphatic polyester material is adhered to a base comprising an oriented sheet of biodegradable aliphatic polyester. Thereby, an adhered product is obtained. The container molding step (1-1) and the base adhesion step (1-2) may be performed simultaneously or separately.

Then, in the integration step (1-3), the laminate layer in the adhered product and the container are heat-sealed. Thereby, the base and the container are integrated to obtain a battery package according to the present invention (blister pack). In FIG. 1, the step of accommodating a battery pack in the container is omitted.

According to the second embodiment, as shown in FIG. 4, an oriented sheet of biodegradable aliphatic polyester is molded into a container having a holder portion by vacuum/pressure forming in the container molding step (2-1) as in the same manner as the container molding step (1-1) of the first embodiment. Then, in the fold formation step (2-2), the peripheral edges of the container are bent on the opposite side of the holder portion to form folds.

The shape and size of the folds will be explained in detail in the following examples. However, there is no particular limitation to the shape and size of the folds as long as they allow integration of the base and the container in the integration step (2-3) and permit a battery pack to be contained in the holder portion. For example, the peripheral edges of the container may be bent on the opposite side of the holder portion.

Then, at last, the base comprising the oriented sheet of biodegradable aliphatic polyester is slid into the folds to integrate the base and the container. Thereby, a battery package according to the present invention is obtained (blister pack). Also in FIG. 2, the step of accommodating the battery pack is omitted.

In FIGs. 3 and 4, it is only described the major steps of the production process for the battery package of the present invention. Detailed conditions for each step and the additional steps such as accommodation of the battery pack before the integration step will be explained in the following examples.

Hereinafter, the present invention is described in further detail by way of examples, but the invention is not limited thereto.

### Example 1

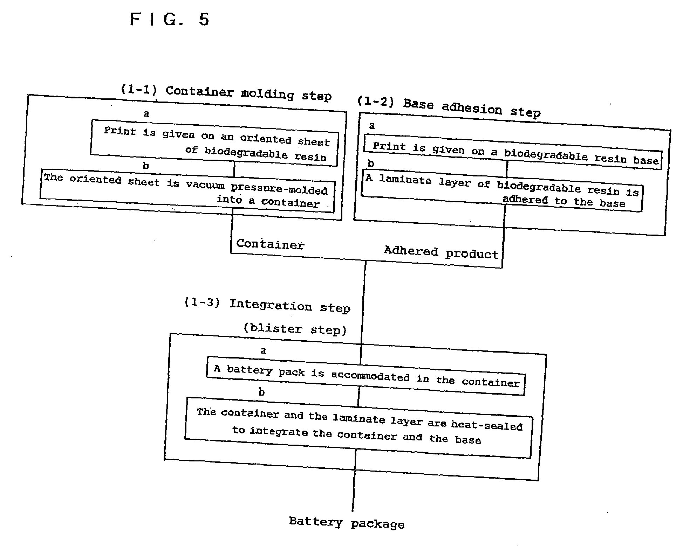

In this example, a battery package 1 of the present invention configured as shown in FIG. 1 was formed in accordance with the steps of the first embodiment shown in FIG. 5.

### Container molding step:

A 250 µm thick transparent oriented sheet of polylactic acid (hereinafter referred to as PLA) was prepared. Tensile strength (breaking strength) thereof was 70 MPa both in length and width directions, tensile elasticity was 3.4 GPa in length direction and 4.4 GPa in width direction and haze was 6 %. Heat shrinkage of the oriented sheet complies with JIS Z-1712, which was measured 3.3 % in length direction and 1.7 % in width direction after heating a test specimen at 120°C for 5 minutes.

In a battery package 1, a certain mark was printed on a surface of a holder portion 3a of a container 3 opposite to the base 2 by rotary printing using UV ink (step (1-1), a). The mark signifies that the battery package 1 according to the present invention is made of a biodegradable resin and therefore environmentally friendly.

Then, using a vacuum/pressure forming machine, the oriented sheet was vacuum pressure-molded into a container 3 configured as shown in FIG.1 (step (1-1), b).

### Base adhesion step:

Apart from the above-mentioned container molding step, a 100 *µ*m thick translucent oriented sheet of PLA was prepared as a base 2. Tensile strength (breaking strength) thereof was 110 MPa both in length and width directions and tensile elasticity was 4.0 GPa in length direction and 4.4 GPa in width direction. Heat shrinkage of the oriented sheet complies with JIS Z-1712, which was measured 1.7 % in length direction and 0.5 % in width direction after heating a test specimen at 120°C for 5 minutes. A certain print was given on the surface of the base 2 facing to the container 3 by rotary printing using UV ink (step (1-2), a).

Then, a 50 *µ*m thick transparent oriented sheet of PLA was prepared as a laminate layer. Tensile strength (breaking strength) thereof was 110 MPa both in length and width directions, tensile elasticity was 3.8 GPa in length direction and 4.3 GPa in width direction and haze was 2 %. Heat shrinkage of the oriented sheet complies with JIS Z-1712, which was measured 2.7 % in length direction and 0.3 % in width direction after heating a test specimen at 120°C for 5 minutes.

On the printed surface of the base 2, the laminate layer was adhered using a polyamide-based adhesive to obtain an adhered product (step (1-2), b).

### Integration step:

A battery pack containing four cylindrical AA batteries (shrink-packed) was prepared, which was accommodated in the holder portion 3a of the container 3 (step (1-3), a).

Then, at last, a brim 3b of the container 3 and the laminate layer (not shown) on the base 2 were bonded by heat seal at 100°C. Thus, the battery package 1 of the present invention was obtained (step (1-3), b).

### Comparative Example 1

In this example, a comparative battery package was formed in the same manner as Example 1 except that PET was used in place of PLA.

### Container molding step:

A transparent PET sheet of 250 *µ*m thick was prepared. Tensile strength (breaking strength) thereof was 68 MPa both in length and width directions, tensile elasticity was 2.1 GPa in length direction and 2.2 GPa in width direction and haze was less than 1 %. In a comparative battery package, a certain mark was printed on a surface of a holder portion 3a of a container 3 opposite to the base 2 by rotary printing using UV ink. The mark signifies that the comparative battery package is made of PET.

Then, using a vacuum forming machine, the sheet was vacuum-molded into a container 3 configured as shown in FIG. 1. Base adhesion step:
Apart from the above-mentioned container molding step, a 100 µm thick translucent PET sheet was prepared as a base 2. Tensile strength (breaking strength) thereof was 112 MPa both in length and width directions and tensile elasticity was 4.1 GPa in length direction and 4.5 GPa in width direction. A certain print was given on the surface of the base 2 facing to the container 3 by rotary printing using W ink.

Then, a 20 µm thick transparent PET sheet was prepared as a laminate layer, which was adhered onto the printed surface of the base 2 using an adhesive. Thereby, an adhered product was obtained.

### Integration step:

Then, a battery pack containing four cylindrical AA batteries (shrink-packed) was prepared, which was accommodated in the holder portion 3a of the container 3.

Then, at last, a brim 3b of the container 3 and the laminate layer (not shown) on the base 2 were bonded by heat seal. Thus, the comparative battery package was obtained.

### Example 2

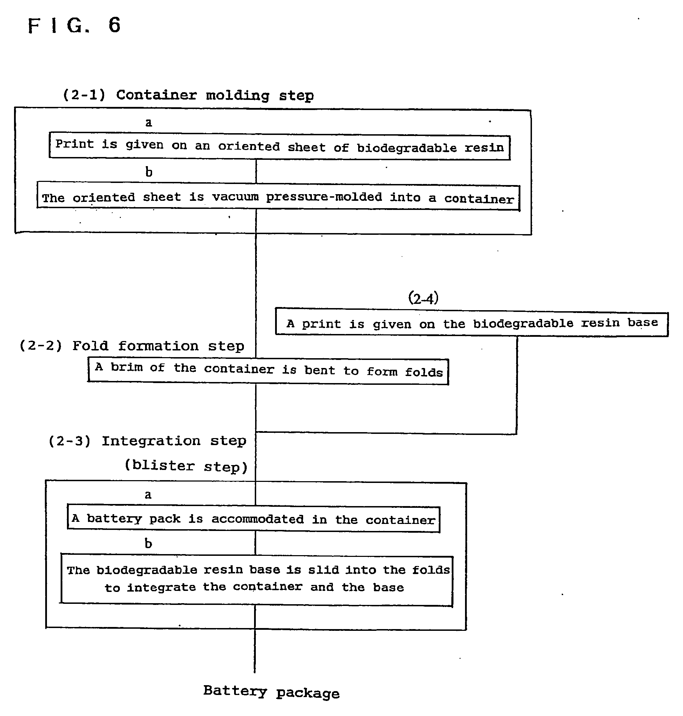

In this example, a battery package 11 configured as shown in FIG. 2 was formed in accordance with the steps of the second embodiment shown in FIG. 6.

### Container molding step:

A 250 µm thick transparent oriented sheet of polylactic acid (hereinafter referred to as PLA) was prepared. Tensile strength (breaking strength) thereof was 70 MPa both in length and width directions, tensile elasticity was 3.4 GPa in length direction and 4.4 GPa in width direction and haze was 6 %. Heat shrinkage of the oriented sheet complies with JIS Z-1712, which was measured 3.3 % in length direction and 1.7 % in width direction after heating a test specimen at 120°C for 5 minutes.

In a battery package 11, a certain mark was printed on a surface of a holder portion 13a of a container 13 opposite to the base 12 by rotary printing using UV ink (step (2-1), a). The mark signifies that the battery package 11 of the present invention is made of a biodegradable resin and therefore environmentally friendly.

Then, using a vacuum/pressure forming machine, the oriented sheet was vacuum pressure-molded into a container 13 configured as shown in FIG.2 (step (2-1), b).

### Fold formation step:

A brim on the periphery of the holder portion 13a of the container 13 was bent to the side opposite to the holder portion 13a, i.e., on the base 12 side, to form folds 13b, 13c and 13d (step (2-2)). Edges indicated by Y were cut at an acute angle such that the folds 13b, 13c and 13d shown in FIG. 2 are not overlapped with each other.

### Base adhesion step:

Apart from the above-mentioned container molding step and fold formation step, a 100 *µ*m thick translucent oriented sheet of PLA was prepared as a base 12. Tensile strength (breaking strength) thereof was 110 MPa both in length and width directions and tensile elasticity was 4.0 GPa in length direction and 4.4 GPa in width direction. Heat shrinkage of the oriented sheet complies with JIS Z-1712, which was measured 1.7 % in length direction and 0.5 % in width direction after heating a test specimen at 120°C for 5 minutes. A certain print was given on the surface of the base 12 facing to the container 13 by rotary printing using UV ink (step (2-4)).

### Integration step:

A battery pack 4 containing four cylindrical AA batteries (shrink-packed) was prepared, which was accommodated in the holder portion 13a of the container 13 (step (2-3), a).

Then, at last, the base 12 was slid into the folds 13b, 13c and 13d in the direction of an arrow X to integrate the base 12 and the container 13. Then, the base 12 and the container 13 were fixed using an acryl-based adhesive. Thereby, a battery package 2 according to the present invention was obtained (step (2-3), b).

### [Evaluation]

The following evaluation tests were carried out with respect to the battery packages 1 and 11 and the comparative battery package obtained as described above.

### 1) Drop test

The battery packages 1 and 11 and the comparative battery package formed as described above were dropped freely onto a concrete surface from the height of 50 cm, respectively.

As a result, every battery package was merely scratched slightly.

### 2) Vibration test

The battery packages 1 and 11 and the comparative battery packages, ten of each, were contained in a unit packing box formed by a usual method, respectively. Then, a packing box for containing five of each unit packing box was formed. With the battery packages contained in these packing boxes, a vibration test was carried out at a vibration frequency of 5 to 50 Hz for about 10 to 30 minutes.

As a result, every battery package was not scratched, cracked or deformed.

### 3) Storage test

The battery packages 1 and 11 and the comparative battery packages, five of each, were stored at controlled temperature and high humidity, i.e., 40°C and 90% RH, for 168 hours. Then, they were visually checked.

As a result, every battery package was not cracked or deformed.

### 4) Weather resistance test

The battery packages 1 and 11 and the comparative battery package were subjected to a solar radiation test using a sunshine weather-meter at 63°C for 240 hours.

The container of the comparative battery package, which was a conventional one, was tuned yellow, but the containers of the battery packages 1 and 11 of the present invention were not.

### Industrial Applicability

Thus, as described above, the present invention provides a battery package having major components made of a biodegradable resin and exhibiting excellent strength, impact resistance and transparency.

## Claims

1. A battery package comprising a base and a container, wherein said container comprises an oriented sheet of biodegradable aliphatic polyester.

2. The battery case in accordance with claim 1, wherein said base comprises biodegradable aliphatic polyester.

3. The battery package in accordance with claim 1 or 2, wherein a laminate layer comprising biodegradable aliphatic polyester is provided between said base and said container.

4. The battery package in accordance with any one of claims 1 to 3, wherein said biodegradable aliphatic polyester is a polylactic polymer.

5. The battery package in accordance with claim 1, wherein said oriented sheet has tensile strength of 40 to 90 MPa.

6. The battery package in accordance with claim 1, wherein said oriented sheet has tensile elasticity of 1 to 7 GPa.

7. The battery package in accordance with claim 1, wherein said oriented sheet has haze of less than 10 %.

8. The battery package in accordance with claim 1, wherein said container holds two or more batteries wrapped in a shrink pack.

9. The battery package in accordance with claim 8, wherein said shrink pack comprises biodegradable aliphatic polyester.

10. The battery package in accordance with claim 9, wherein said biodegradable aliphatic polyester is a polylactic polymer.

11. The battery package in accordance with claim 9, wherein said shrink pack is made of an oriented sheet of biodegradable aliphatic polyester.

12. A process for producing a battery package comprising the steps of: molding an oriented sheet of biodegradable aliphatic polyester into a container having a holder portion by vacuum/pressure forming; and integrating said container with a base comprising an oriented sheet of biodegradable aliphatic polyester to obtain a battery package.

13. The process for producing a battery package in accordance with claim 12, wherein a laminate layer comprising an oriented sheet of biodegradable aliphatic polyester is adhered to said base to obtain an adhered product, and said laminate layer and said container are heat-sealed to integrate said base and said container.

14. The process for producing a battery package in accordance with claim 12, wherein an edge of said container is bent on the opposite side of said holder portion to form a fold, and said base is slid into said fold to integrate said base and said container.

15. The process for producing a battery package in accordance with claim 12, wherein said biodegradable aliphatic polyester is a polylactic polymer.

16. The battery package in accordance with claim 12, wherein said oriented sheet has tensile strength of 40 to 90 MPa.

17. The battery package in accordance with claim 12, wherein said oriented sheet has tensile elasticity of 1 to 7 GPa.

18. The battery package in accordance with claim 12, wherein said oriented sheet has haze of less than 10 %.
